# EUROPEAN PATENT SPECIFICATION

(11) **EP 2 322 778 B1**
(45) Date of publication and mention of the grant of the patent: **31.07.2013**
(21) Application number: 09425468.7
(22) Date of filing: 17.11.2009
(51) Int. Cl.: F01P 7/04, F16D 48/06

(54) **Method and device for the predictive estimate of the wear of the coupling joint between a cooling circuit fan and an engine system in a vehicle**
Verfahren und Vorrichtung zur voraussagenden Schätzung des Verschleißes des Kupplungsgelenks zwischen einem Kühlkreislauflüfter und einem Motorsystem in einem Fahrzeug
Procédé et dispositif pour l'évaluation prédictive de l'usure du joint de couplage entre un ventilateur de circuit de refroidissement et système de moteur dans un véhicule

(43) Date of publication of application: 18.05.2011
(73) Proprietor: Iveco S.p.A., 10156 Torino (IT)
(72) Inventor: Colombano, Mauro, 15040 Occimiano (IT); D'Ambrosio, Carlo, 10137 Torino (IT)
(74) Representative: Borsano, Corrado

(56) References cited:
- EP-A2- 0 886 047
- DE-A1- 10 355 253
- FR-A1- 2 593 287
- GB-A- 2 335 276

## Description

### Application field of the invention

The present invention refers to a method and device for the predictive estimate of the wear of the coupling joint between a cooling circuit fan and an engine system in a vehicle.

A method to estimate an excessive wear of a clutch is known in FR 2 593 287.

### Description of the prior art

The propulsion systems using thermal engines are usually equipped with a fluid cooling circuit, with different levels of complexity, which uses a fan.

There are various vehicle systems that may require the activation of the fan: for example, in addition to the circulation system of the engine cooling fluid, which may include various additional elements such as the turbosupercharger circuit and its respective interrefrigeration steps, also the deceleration systems of the dissipative type, such as for example hydraulic decelerators, known as "retarder", the air-conditioning unit, the power takeoffs, and others.

Usually there is one single fan placed between the engine and the radiator cores, such as the condenser of the air-conditioning circuit, the interrefrigeration heat-exchanger ("aftercooler") of the turbosupercharger circuit, and the engine cooling radiator.

There are several travel conditions wherein the fan rotation speed would be too high, if the fan was able to rotate only at the maximum speed, having a fixed coupling with the drive shaft. This would cause an excessive cooling of the circulating fluids: for example an excessive cooling of the engine oil would increase its viscosity, which increases its friction and the fuel consumption.

Moreover the cooling fan absorbs a remarkable percentage of the power delivered by the engine, thus stopping it, or decreasing its rotation speed in particular operating conditions, makes it possible to spare a lot of energy. Therefore it is known in the art to make the fan rotate at different discrete speeds, according to the different conditions detected by specially provided control circuits. In order to actuate the speed control, the fan is usually activated by a connection to the drive shaft, by means of appropriate devices which, for example, are suitable to control the speed variation, instead of using a direct connection to the drive shaft.

Devices such as the viscostatic joint, or the electromagnetic coupling, which generate a friction coupling between fan and engine, are known in the art, and, according to the vehicular conditions, they can vary the gear ratio between drive shaft and fan, according to respectively continuous and discrete ratio levels. Such different levels determine different power absorption and therefore different fuel consumption levels. Such coupling devices, if they are activated according to discretizing logics that may generate frictional heat, are subject to wear which may provoke their failure or their damaging, after that they are no longer operating and need to be replaced. This situation is very dangerous, since it may cause the failure of the cooling fan, and therefore the overheating of the propulsion system.

There is therefore the need for estimate methods which allow to replace the coupling device enough time before a failure occurs, and/or to minimize the wear affecting the coupling devices during the life of the vehicle and of its propulsive system.

### Summary of the invention

Therefore the aim of the present invention is to overcome all the drawbacks mentioned above and to provide a method and device for a predictive estimate of the wear of a coupling joint between a cooling circuit fan and an engine system, able to determine beforehand the need of the component to be replaced and to avoid the failure of the component itself, and to minimize the wear affecting the coupling joint.

The subject of the present invention, according to claim 1, is a method for the predictive estimate of the wear of a coupling joint between a cooling circuit fan and an engine system in a vehicle, comprising the steps of: evaluating the difference between a measured engine speed value and a measured fan speed value; using the difference for finding, in a stored table, an instant wear increment value of the material of said coupling joint; integrating said instant wear increment value by adding it to previous values, starting from a first use of said coupling joint and obtaining an integrated value; comparing said integrated value with a tabular value, which provides an expected wear value, or tolerable wear, as a function of the overall distances covered by the vehicle; if said integrated value is lower than said expected wear value, said predictive estimate provides a positive indication of the correct instant usage of the coupling joint, otherwise it provides a negative indication of an excessive instant wear of the coupling joint.

The subject of the present invention is also, according to claim 3, a method for controlling the rotation speed of a fan of the engine cooling circuit, said fan being coupled to said engine unit by means of an electromagnetic joint coupling, said control being performed by choosing a speed variation of the continuous or of the discrete type, which is chosen according to a method for the predictive estimate of the wear as in the claim 1, said positive indication of a correct instant use of the electromagnetic joint coupling determining the choice of the speed variation of the continuous type, while said negative indication of excessive instant wear of the coupling device determining the choice for a speed variation of the discrete type.

The subject of the present invention is in particular a method and device for the predictive estimate of the wear of a coupling joint between a cooling circuit fan and an engine system in a vehicle, as described more fully in the claims which are an integral part of the present description.

### Brief description of the Figures

Further purposes and advantages of the present invention will become clear from the following detailed description of a preferred embodiment (and respective alternative embodiments) and the drawings that are attached hereto, which are merely illustrative and non-limitative, in which:
figure 1 shows a block diagram of an embodiment of the method for the predictive estimate of the wear according to the present invention;
figure 2 shows a block diagram of an embodiment of the control method of the fan rotation speed which exploits the predictive estimate of the wear according to the present invention;
figures 4, 3, 5 show block diagrams of embodiments of the INT, ENG, CLI blocks of the method of fig. 2.

In the drawings the same reference numbers and letters are used to identify the same elements or components.

### Detailed description of preferred embodiments of the invention

The method is described below with reference to the functional block diagrams of the attached figures, wherein each block corresponds to the logic functions performed by the apparatus which realizes them.

Different systems of the vehicle may require the activation of the fan, as they generate heat which is transferred in the respective cooling systems. In the non-limitative example described below, the involved systems are the engine unit, the deceleration system (henceforth called retarder), and the air-conditioning unit.

Said vehicular systems provide, in a way known in the art, for example on the CAN internal data line, signals or magnitudes which, together with others, are used as input of the predictive estimate of the wear that is object of the invention.

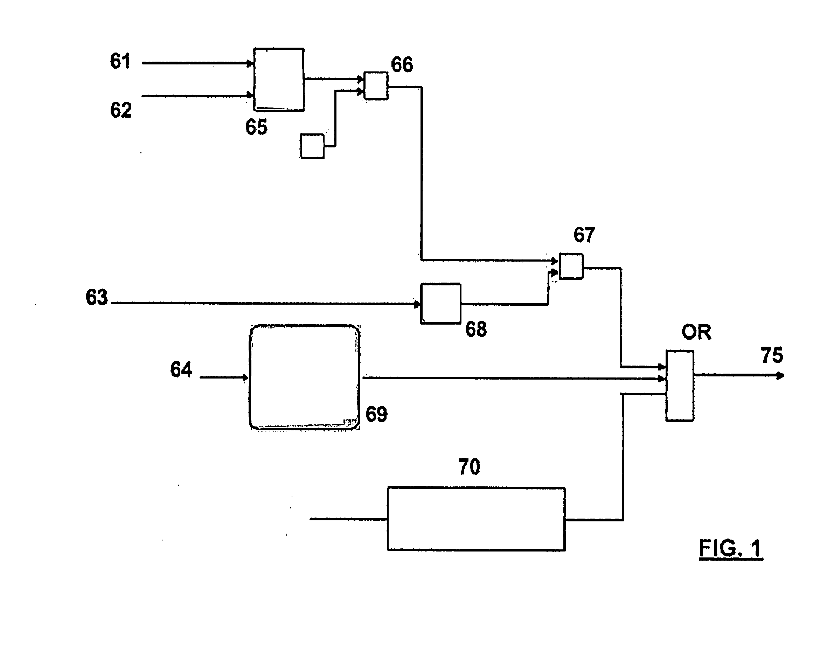

With reference to figure 1, the method according to the invention is able to evaluate the degree of instant and progressing wear of the electromagnetic coupling according to available tabular values.

Measured values of angular speed engine, of instant fan speed and of overall distance covered are available, for example by means of the CAN data line. Moreover, the temperature data of the electromagnetic coupling may also be available.

The fan speed 61 and the drive shaft speed 62 are provided to a block 65 which verifies the difference between the two speed values, and uses such difference in order to find in a pre-stored table, of the type known, the increment value of the instant wear which is currently occurring. This table contains the statistical data on the instant wear increment (in mm/s) of the thickness of the contact parts of the clutch of the electromagnetic coupling previously detected.

This wear value is integrated in an integrator 66. Each time the engine is started, the integrator starts from zero; each time the engine is stopped, the obtained value is stored and is then added to the trend obtained in the following functioning of the engine.

The output of the integrator is provided to a comparator 67 which compares it with a tabular value provided by the block 68, which gives in output a value of expected wear, or tolerable wear, as a function of the overall covered kilometres which are available at the input 63. Also this table is preloaded.

If the calculated wear is lower than the expected and tolerable value, then the comparator 67 will provide in output a positive indication on the correct instant use of the coupling, otherwise the comparator 67 will provide in output a negative indication of excessive instant wear. Optionally, a data relating to the measured temperature of the coupling may be available. The latter is provided to the input 64 of a block 69 which evaluates if the coupling temperature is higher than a tolerable threshold for the type of joint in use. Then, if the temperature is lower than a threshold, also the block 69 will provide in output a positive indication on the correct instant use of the coupling, otherwise it will provide in output a negative indication of excessive instant wear.

The data that are made available as described above may for example be used for calculating, according to its real use, the estimated residual life of the joint, and, for example, for sending a message suggesting a verification of the actual wear of the joint itself.

The method described above, namely the evaluation of the degree of the instant and progressive wear of the electromagnetic joint, may be used for controlling the cooling fan speed in case of electromagnetic joint coupling. It is known in the art to make the fan rotate at different speeds, according to the different conditions detected by specially provided control circuits. In this case there is a direct coupling with appropriate gear ratios between the engine and the fan by means of the coupling.

Said modalities for varying the fan speed, however, are not optimal, since the simplified decision mode, according to which the fan has two or three discrete progressive speeds, still determines a too high fan rotation speed, which does not optimize the behaviour of the engine in terms of energy consumption. On the other hand, the direct coupling used by said basic control guarantees the less possible wear of the material of the coupling.

On the contrary, when it is possible, it is preferable to realize a continuous control of the fan speed, since it is known that the continuous control is able to optimize the fuel consumption, and also to provide a higher control on the operating temperatures of the vehicle systems cooled by the fan. In this case, the fan speed control of the continuous type may be applied to the electromagnetic coupling by means of a pulse control, using the PWM technique (Pulse Width Modulation). But on the other hand, the pulse control of the type PWM may excessively increment the wear of the material of the coupling.

Therefore the method described above for evaluating the degree of progressive and instant wear of the electromagnetic coupling may advantageously be used for actuating a more accurate fan speed control, in order to instantly choose between a discrete or a continuous speed control, thus optimizing both fuel consumption and wear, and therefore extending the life of the coupling.

The method according to the invention may then foresee an optional block 70 suitable for identifying the type of vehicular usage, which, as a matter of fact, evaluates if it is used on motorways or not, according to the available vehicular parameters. As a matter of fact an usage with reduced load may be defined of the type "on motorways", since such usage is characterized by reduced speed variations, and reduced road loads due to slopes, causing therefore less wearing.

The block 70 may be realized in a way known in the art.

Hence a motorway usage would be suitable for a continuous pulse control of the fan speed, in order to minimize fuel consumption. On the contrary, a more demanding usage with numerous upward slopes, where the fuel consumption increases a lot, the advantage of a continuous control would be less evident, while the risk of wearing the coupling may prevail. Therefore the output of the block 70 gives to the system the indication to choose the speed control of the discrete or of the continuous type.

The outputs of the blocks 67, 69 and 70 are provided to a logic OR which provides in output the signal 75 indicating the speed control type to be actuated, which may therefore be generated by any of the three branches described above.

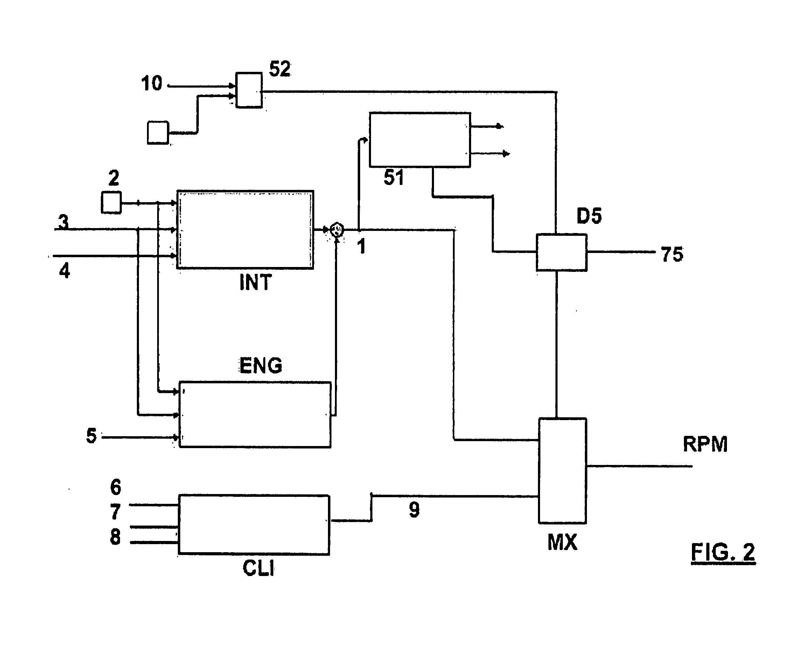

In the following there is the description of an embodiment of a control method of the fan speed, suitable for instantly choosing between a discrete or a continuous speed control. With reference to figure 2, the continuous control method comprises a block INT which evaluates the contribution of the retarder, when it is present in the engine system, to the fan speed value; moreover a block ENG evaluates the contribution of the engine system, which may comprise several additional elements, such as the turbo-charger circuit, to said value. The two values are added up in output in order to obtain an overall value 1. In case the retarder is not present, its contribution is null.

The retarder and the engine cooling system are managed together, since in the overall engine system there is the interaction between the two effects generated by the water heating cycle and by the functioning of the retarder.

The retarder generates heat in a rapid way, thus according to the percentage of braking torque required by the retarder, the block performs a predictive control of which fan speed is necessary in order to cool the water. Considering only the contribution of the engine system (block ENG) would excessively delay the optimal intervention of the fan. Therefore the block INT estimates the amount of thermal power that the retarder will introduce in the cooling system: as a matter of fact the required fan rotation speed will be higher if the retarder is activated.

The block INT receives as input data relating to: a reference temperature parameter 2 of the fluid in the engine cooling system (for example 102 °C) which ideally should be maintained; the percentage 4 of braking torque required by the retarder 4; the current temperature 3 of the fluid in the engine cooling system.

The block ENG receives as input data relating to: the reference temperature parameter 2; the current temperature 3 of the fluid in the engine cooling system; the measured value 5 of the current fan speed.

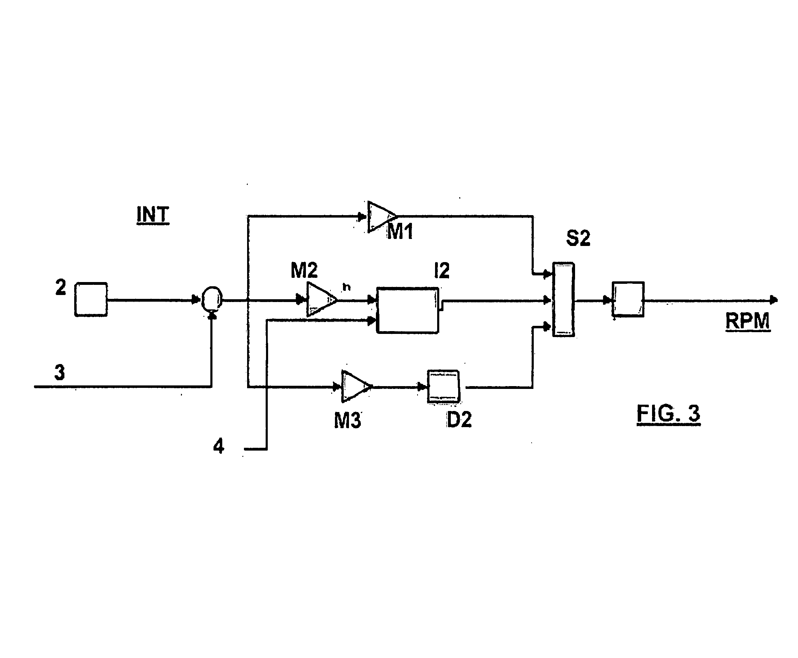

An embodiment of the blocks INT and ENG will be described below with reference respectively to figures 2 and 3.

Preferably it is also present a further block CLI suitable to determine and provide as output 9 a fan speed value given by the contribution of the behaviour of the air-conditioning unit. As a matter of fact, it is necessary to provide a control of the pressure of the gas (freon) in the circuit of the air-conditioning unit, which should not exceed a certain value. Given that the increase of the gas pressure is correlated to the temperature increase of the respective cooling circuit, the control of the gas pressure may be performed by controlling the fan rotation speed.

The block CLI receives as input data relating to: a constant reference pressure value 6 of the gas (freon) of the cooling circuit (for example 16 bar); a current measured pressure value 7 of the freon; a fan speed value 8 (for example 850 rpm).

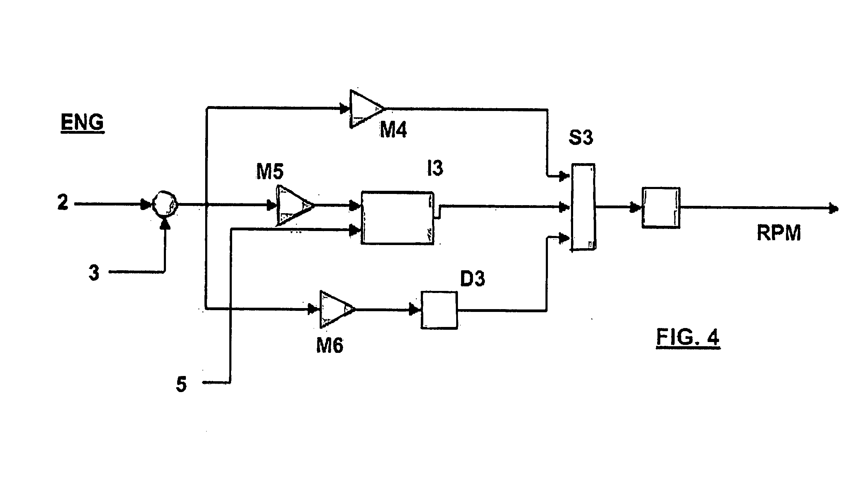

An embodiment of the block CLI will be described below with reference to figure 4.

If the block CLI is not present, the fan speed control value RPM is given by the contribution at the output 1. Otherwise, if the block CLI is present, the fan speed control value RPM is determined in a block MX as the highest value between the two values present in the outputs 1 and 9.

A block 51 receives the speed value 1 obtained by adding up the value calculated by the blocks INT and ENG described above, and evaluates its positioning with respect to two discrete fan speed values, an intermediate value and a maximum value of direct coupling, or the null value, which it chooses at its outputs.

A decision circuit D5 is foreseen to actuate the decision on the type of fan speed control, enabling the outputs of the block MX described above or of the block 51 according to the signals received at its inputs. A control signal is the signal 75 described above.

A block 52 receives a measurement 10 of the current fuel consumption. If said measurement is lower than a threshold 11, for example it is null while braking or when the accelerator pedal is released, the decision circuit D5 provides to the block 51 a choice signal of the discrete control, since there is no problem of fuel consumption.

In a non limitative example the blocks INT, ENG, CLI comprise parallel branches which process the input data according to criteria of integration, derivation and multiplication, which are added up and limited in order to obtain the output value. The input data are available by means of the internal CAN line.

In fig. 3 the block INT evaluates the difference between the temperature constant 2 and the measured value 3 defined above. The difference is provided to three multiplier inputs by the appropriate constants M1, M2, M3, belonging to three parallel branches: the output of M1 is directly provided to an adder S2; the output of M2 feeds an integrator I2 whose second input receives the percentage value 4 of braking torque required by the retarder, and whose output is provided to a second input of the adder S2; the output of M3 is, on the contrary, provided to a third input of the adder S2. The latter provides in output the sum of the three received contributions to a saturator, whose output provides the value of the block INT contribution to the fan speed value.

In fig. 4 the block ENG evaluates the difference between the temperature constant 2 and the measured value 3 defined above. The difference is provided to three multiplier inputs by the appropriate constants M4, M5, M6, belonging to three parallel branches: the output of M4 is directly provided to an adder S3; the output of M5 feeds an integrator I3 whose second input receives the measured value 5 of the current fan speed, and whose output is provided to a second input of the adder S3; the output of M6 is, on the contrary, provided to a derivator D3, whose output is provided to a third input of the adder S2. The latter provides in output the sum of the three received contributions to a saturation circuit, whose output provides the value of the block INT contribution to the fan speed value.

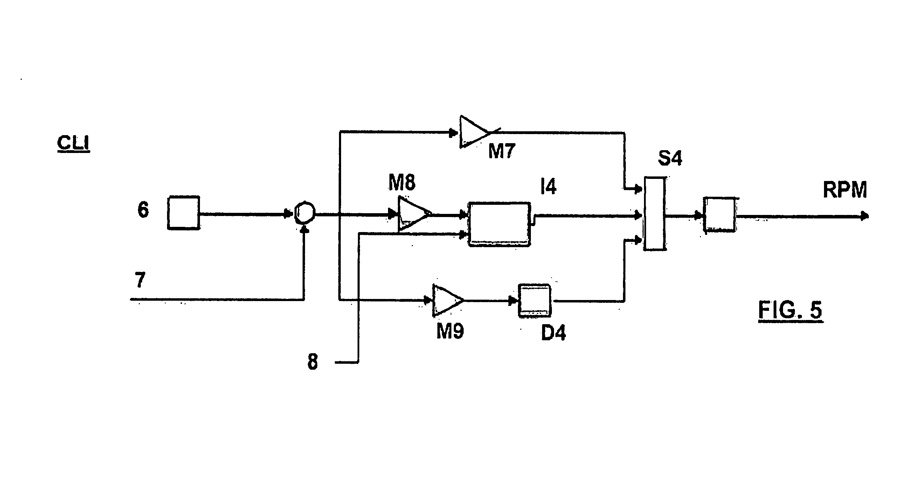

In fig. 5 the block CLI evaluates the difference between the pressure constant 6 of the freon and the measured value 7 defined above. The difference is provided to three multiplier inputs by the appropriate constants M7, M8, M9, belonging to three parallel branches: the output of M7 is directly provided to an adder S4; the output of M8 feeds an integrator I4 whose second input receives the fan speed value 8, and whose output is provided to a second input of the adder S4; the output of M6 is, on the contrary, provided to a derivator D4, whose output is provided to a third input of the adder S4. The latter provides in output the sum of the three received contributions to a saturator, whose output provides the value of the block CLI contribution to the fan speed value.

The apparatus suitable for the realization of the method may comprise an electronic control unit, which comprises a software which performs the operations described above, appropriately programmed using the programming techniques available to the person skilled in the art. Moreover the apparatus comprises an interface which converts the fan speed data provided in output by the control unit into an electric signal or similar, whose characteristics depend on the type of coupling device between the fan and the drive shaft. In the example of the electromagnetic coupling described above, the signal is a pulse electric signal.

At least a portion of the control method according to the present invention may advantageously be realized by means of a computer program, which comprises program code means performing one or more steps of said method, when said program is run on a computer. For this reason the scope of the present patent is meant to cover also said computer program and the computer-readable means that comprises a recorded message, such computer-readable means comprising the program code means for performing one or more steps of such method, when such program is run on a computer.

It will be apparent to the person skilled in the art that further alternative and equivalent embodiments of the invention can be conceived and reduced to practice without departing from the scope of the invention.

From the description set forth above it will be possible for the person skilled in the art to embody the invention with no need of describing further details.

## Claims

1. Method for the predictive estimate of the wear of a coupling joint between a cooling circuit fan and an engine system in a vehicle, comprising the steps of:
- evaluating the difference between a measured engine speed value (61) and a measured fan speed value (62);
- using the difference in order to find in a stored table (65), an increment value of the instant wear of said coupling joint;
- integrating said increment value of the instant wear adding it up to previous values starting from a first usage of said coupling joint, and obtaining an integrated value (66);
- comparing (67) said integrated value with a tabular value (68), which provides a value of expected wear, or tolerable wear, as a function of the overall kilometres covered by the vehicle;
- said predictive estimate providing a positive indication of a correct instant use of the coupling joint, if said integrated value is lower than said value of expected wear, otherwise providing a negative indication of excessive instant wear of the coupling joint.

2. Control method as in claim 1, further comprising a comparison step (69) of a measured temperature value (64) of said electromagnetic coupling with respect to a threshold temperature value;
- said predictive estimate providing a positive indication of a correct instant use of the coupling joint, if said measured temperature value is lower than threshold temperature value, otherwise providing a negative indication of excessive instant wear of the coupling joint.

3. Method for controlling the rotation speed of a fan of the engine cooling circuit, said fan being coupled to said engine unit by means of an electromagnetic joint coupling, said control being performed by choosing a speed variation of the continuous or of the discrete type, which is chosen according to a method for the predictive estimate of the wear as in the claim 1 or 2, said positive indication of a correct instant use of the coupling joint determining the choice of the speed variation of the continuous type, while said negative indication of excessive instant wear of the coupling device determining the choice for a speed variation of the discrete type.

4. Control method as in claim 3, further comprising an evaluation step of the vehicle usage, suitable for providing an indication of usage "on motorways" or not, the indication of a usage on motorways determining the choice of the speed variation of the continuous type, otherwise of the speed variation of the discrete type.

5. Control method as in claim 3 or 4, wherein said speed variation of the continuous type is determined by means of the steps of:
- evaluating the contribution to the fan rotating speed deriving from the presence of a retarder in the engine unit, according to the difference between a reference temperature value (2) of the fluid of the engine cooling system and a measured current temperature (3) of the fluid in the engine cooling system, and according to a percentage value (4) of the braking torque required by the retarder;
- evaluating the contribution to the fan rotating speed deriving from the engine system, according to the difference between a reference temperature value (2) of the fluid of the engine cooling system and a measured current temperature (3) of the fluid in the engine cooling system, and according to a measured value (5) of the current speed of the fan;
- obtaining said speed variation of the continuous type by adding up the contributions given by said retarder and engine system.

6. Control method as in the claim 5, further comprising a step of:
- evaluating the contribution to the fan rotating speed deriving from an air-conditioning unit, according to the difference between a reference pressure value of the gas of the air-conditioning cooling system (6), and a measured current value (7) of the gas pressure, and according to a current speed of the fan;
- obtaining said speed variation of the continuous type from the highest value between said sum of the contributions given by said retarder and engine system, and said contribution deriving from the air-conditioning unit.

7. Apparatus for the predictive estimate of the wear of a coupling joint between a cooling circuit fan and an engine unit in a vehicle, comprising an electronic control unit comprising means for performing the steps of the method according to any of the previous claims, and an interface for converting the output data of said electronic control unit into a control signal for a coupling device between said cooling circuit fan and said vehicle engine.

8. Apparatus for controlling the rotation speed of an engine cooling circuit fan, comprising an electronic control unit comprising means for performing the steps of the method according to any of the previous claims, and an interface for converting the output data of said electronic control unit into a control signal for a coupling device between said cooling circuit fan and said vehicle engine.

9. Computer program comprising program code means suitable for performing the steps of any claim from 1 to 6, when such program is run on a computer.

10. Computer-readable means comprising a recorded program, said computer-readable means comprising program code means suitable for performing the steps according to the claims from 1 to 6, when said program is run on a computer.

## Patentansprüche

1. Verfahren zur voraussagenden Schätzung des Verschleißes eines Kupplungsgelenks zwischen einem Kühlkreislauflüfter und einem Motorensystem in einem Fahrzeug, umfassend die Schritte
- Evaluieren der Differenz zwischen einem gemessenen Motorengeschwindigkeitswert (61) und einem gemessenen Lüftergeschwindigkeitswert (62);
- Verwenden der Differenz, um einen Inkrementwert des augenblicklichen Verschleißes des Kupplungsgelenks in einer gespeicherten Tabelle (65) zu finden;
- Integrieren des Inkrementwertes des augenblicklichen Verschleißes, der auf vorhergehende Werte, beginnend von einer ersten Benutzung des Kupplungsgelenks addiert wird und Bezug eines integrierten Wertes (66);
- Vergleichen (67) des integrierten Wertes mit einem tabellarischen Wert (68), der einen Wert des erwarteten Verschleißes oder eines tolerierbaren Verschleißes als Funktion der durch das Fahrzeugs insgesamt zurückgelegten Kilometern vorgibt;
- wobei die vorausgesagte Schätzung ein positives Anzeichen der korrekten augenblicklichen Verwendung des Kupplungsgelenks liefert, wenn der integrierte Wert niedriger ist als der Wert des erwarten Verschleißes oder andernfalls sie ein negatives Anzeichen des übermäßigen augenblicklichen Verschleißes des Kupplungsgelenks liefert.

2. Kontrollverfahren gemäß Anspruch 1, weiterhin umfassend einen Vergleichsschritt (69) eines gemessenen Temperaturwertes (64) der elektromagnetischen Kupplung im Hinblick auf einen Temperaturschwellenwert;
- wobei die voraussagende Schätzung ein positives Anzeichen eines korrekten Verschleißes des Kupplungsgelenks liefert, wenn der gemessene Temperaturwert geringer ist als der Temperaturschwellenwert oder andernfalls sie ein negatives Anzeichen des übermäßigen Verschleißes des Kupplungsgelenks liefert.

3. Verfahren zur Kontrolle der Rotationsgeschwindigkeit eines Lüfters eines Motorkühlkreislaufs, wobei der Lüfter mittels einer elektromagnetischen Gelenkkupplung an die Motoreinheit gekoppelt ist, wobei die Kontrolle durchgeführt wird, indem eine kontinuierlich geartete oder diskret geartete Geschwindigkeitsvariation gewählt wird, die gewählt wird gemäß einem Verfahren der voraussagenden Schätzung des Verschleißes nach Anspruch 1 oder 2, wobei das positive Anzeichen einer korrekten augenblicklichen Verwendung des Kupplungsgelenks die Wahl der kontinuierlich gearteten Geschwindigkeitsvariation bestimmt, wohingegen das negative Anzeichen des übermäßigen Verschleißes der Kupplungsvorrichtung die Wahl der diskret gearteten Geschwindigkeitsvariation bestimmt.

4. Kontrollverfahren gemäß Anspruch 3, weiterhin umfassend einen Evaluierungsschritt der Fahrzeugnutzung, dazu geeignet, ein Anzeichen bezüglich der Nutzung "auf Autobahnen" oder nicht zu liefern, wobei das Anzeichen der Nutzung auf Autobahnen die Wahl der kontinuierlich gearteten Geschwindigkeitsvariation bestimmt, oder andernfalls die diskret geartete Geschwindigkeitsvariation bestimmt.

5. Kontrollverfahren gemäß Anspruch 3 oder 4, wobei die Geschwindigkeitsvariation des kontinuierlichen Typs mittels der folgenden Schritte bestimmt wird:
- Evaluieren des Beitrags an der Lüfterrotationsgeschwindigkeit, der sich vom Vorhandensein eines Verzögerers in der Motoreneinheit in Abhängigkeit von der Differenz zwischen einem Referenztemperaturwert (2) des Fluids des Motorkühlsystems und einer gemessenen momentanen Temperatur (3) des Fluids im Motorkühlsystem und in Abhängigkeit von einem Anteilswert (4) des Bremsmomentes ableitet, das von dem Verzögerer benötigt wird;
- Evaluieren des Beitrags an der Lüfterrotationsgeschwindigkeit, der sich vom Motorensystem in Abhängigkeit der Differenz zwischen einem Referenztemperaturwert (2) des Fluids des Motorkühlsystems und einer gemessenen momentanen Temperatur (3) des Fluids im Motorkühlsystems und in Abhängigkeit von einem gemessenen Wert (5) der momentanen Geschwindigkeit des Lüfters ableitet;
- Bezug der kontinuierlich gearteten Geschwindigkeitsvariation durch das Addieren der Beiträge, die durch den Verzögerer und das Motorsystem beigetragen werden.

6. Kontrollverfahren nach Anspruch 5, weiterhin umfassend einen Schritt zur
- Evaluierung des Beitrags der Lüfterrotationsgeschwindigkeit, der sich von einer Klimaanlageneinheit in Abhängigkeit der Differenz zwischen einem Referenzdruckwert des Gases des Klimaanlagenkühlsystems (6) und einem gemessenen momentanen Wert (7) des Gasdrucks und in Abhängigkeit einer momentanen Geschwindigkeit des Lüfters ableitet;
- Bezug der kontinuierlich gearteten Geschwindigkeitsvariation vom höchsten Wert zwischen der Summe der Beiträge des Verzögerers und des Motorensystems und des sich von der Klimaanlageneinheit ableitenden Beitrags.

7. Vorrichtung zur voraussagenden Schätzung des Verschleißes eines Kupplungsgelenks zwischen einem Kühlkreislauflüfter und einer Motoreinheit in einem Fahrzeug umfassend eine elektronische Kontrolleinheit umfassend Mittel zur Durchführung der Verfahrensschritte gemäß einem der vorangehenden Ansprüche und eine Schnittstelle zum Konvertieren der Ausgabedaten der elektronischen Kontrolleinheit in ein Kontrollsignal für eine Kupplungsvorrichtung zwischen dem Kühlkreislauflüfter und dem Fahrzeugmotor.

8. Vorrichtung zum Kontrollieren der Rotationsgeschwindigkeit eines Motorkühlkreislauflüfters, umfassend eine elektronische Kontrolleinheit umfassend Mittel zur Durchführung der Verfahrensschritte gemäß einem der vorangehenden Ansprüche und eine Schnittstelle zum Konvertieren der Ausgabedaten der elektronischen Kontrolleinheit in ein Kontrollsignal für eine Kupplungsvorrichtung zwischen dem Kühlkreislauflüfter und dem Fahrzeugmotor.

9. Computerprogramm umfassend Programmcodemittel, die geeignet sind, die Schritte nach einem der Ansprüche 1 bis 6 durchzuführen, wenn solch ein Programm auf einem Computer ausgeführt wird.

10. Computerlesbare Mittel umfassend ein aufgezeichnetes Programm, wobei die computerlesbaren Mittel Programmcodemittel umfassen, die zur Durchführung der Schritte gemäß den Ansprüchen 1 bis 6 geeignet sind, wenn das Programm auf einem Computer ausgeführt wird.

## Revendications

1. Procédé pour l'estimation prédictive de l'usure d'un joint de couplage entre un ventilateur de circuit de refroidissement et un système de moteur dans un véhicule, comprenant les étapes de :
- évaluer la différence entre une valeur de vitesse de moteur mesurée (61) et une valeur de vitesse de ventilateur mesurée (62) ;
- utiliser la différence pour trouver dans un tableau de stockage (65) une valeur incrémentielle de l'usure présente dudit joint de couplage ;
- intégrer ladite valeur incrémentielle de l'usure présente en l'ajoutant à des valeurs précédentes en commençant à partir de la première utilisation dudit joint de couplage, et obtenir une valeur intégrée (66) ;
- comparer (67) ladite valeur intégrée à une valeur tabulaire (68), qui fournit une valeur de l'usure prévue, ou d'une usure tolérable, en tant que fonction de l'ensemble des kilomètres parcourus par le véhicule ;
- ladite estimation prédictive fournissant une indication positive d'une utilisation présente correcte du joint de couplage si ladite valeur intégrée est inférieure à ladite valeur de l'usure prévue, sinon fournissant une indication négative de l'usure présente excessive du joint de couplage.

2. Procédé de commande selon la revendication 1, comprenant en outre une étape de comparaison (69) d'une valeur de température mesurée (64) dudit couplage électromagnétique par rapport à une valeur de température de seuil ;
- ladite estimation prédictive fournissant une indication positive d'une utilisation présente correcte du joint de couplage si ladite valeur de température mesurée est plus basse que la valeur de température de seuil, sinon fournissant une indication négative d'une usure présente excessive du joint de couplage.

3. Procédé pour commander la vitesse de rotation d'un ventilateur du circuit de refroidissement d'un moteur, ledit ventilateur étant couplé à ladite unité de moteur au moyen d'un couplage de joint électromagnétique, ladite commande étant exécutée en sélectionnant une variation de vitesse du type continu ou du type discret, qui est sélectionné en accord avec un procédé pour estimation prédictive de l'usure comme dans la revendication 1 ou 2, ladite indication positive d'une utilisation présente correcte du joint de couplage déterminant le choix de la variation de vitesse du type continu, tandis que ladite indication négative d'une usure présente excessive du dispositif de couplage détermine le choix d'une variation de vitesse du type discret.

4. Procédé de commande selon la revendication 3, comprenant en outre une étape d'évaluation de l'utilisation du véhicule, apte à fournir une indication d'utilisation "sur des autoroutes" ou non, l'indication d'utilisation sur des autoroutes déterminant le choix de la variation de vitesse du type continu, sinon de la variation de vitesse du type discret.

5. Procédé de commande selon la revendication 3 ou 4, dans lequel ladite variation de vitesse du type continu est déterminée au moyen des étapes de :
- évaluer la contribution à la vitesse de rotation du ventilateur dérivée de la présence d'un retardateur dans l'unité de moteur, en accord avec la différence entre une valeur de température de référence (2) du fluide du système de refroidissement du moteur et une température courante mesurée (3) du fluide dans le système de refroidissement du moteur, et en accord avec une valeur de pourcentage (4) du couple de freinage requis par le retardateur ;
- évaluer la contribution à la vitesse de rotation du ventilateur dérivée du système de moteur, en accord avec la différence entre une valeur de température de référence (2) du fluide du système de refroidissement du moteur et une température courante mesurée (3) du fluide dans le système de refroidissement du moteur, et en accord avec une valeur mesurée (5) de la vitesse courante du ventilateur ;
- obtenir ladite variation de vitesse du type continu en additionnant les contributions fournies par ledit retardateur et ledit système de moteur.

6. Procédé de commande selon la revendication 5, comprenant en outre une étape de :
- évaluer la contribution à la vitesse de rotation du ventilateur dérivée d'une unité de conditionnement d'air, en accord avec la différence entre une valeur de pression de référence du gaz du système de refroidissement de conditionnement d'air (6), et une valeur courante mesurée (7) de la pression du gaz, et en accord avec une vitesse courante du ventilateur ;
- obtenir ladite variation de vitesse du type continu par la valeur la plus élevée entre ladite somme des contributions fournies par ledit retardateur et ledit système de moteur, et ladite contribution dérivée de l'unité de conditionnement d'air.

7. Appareil pour l'estimation prédictive de l'usure d'un joint de couplage entre un ventilateur de circuit de refroidissement et une unité de moteur dans un véhicule, comprenant une unité de commande électronique comprenant des moyens pour exécuter les étapes du procédé selon l'une quelconque des revendications précédentes, et une interface pour convertir les données de sortie de ladite unité de commande électronique en un signal de commande pour un dispositif de couplage entre ledit ventilateur de circuit de refroidissement et ledit moteur de véhicule.

8. Appareil de commande de la vitesse de rotation d'un ventilateur de circuit de refroidissement d'un moteur, comprenant une unité de commande électronique comprenant des moyens pour exécuter les étapes du procédé selon l'une quelconque des revendications précédentes, et une interface pour convertir les données de sortie de ladite unité de commande électronique en un signal de commande pour un dispositif de couplage entre ledit ventilateur de circuit de refroidissement et ledit moteur de véhicule.

9. Programme d'ordinateur comprenant des moyens de code programme aptes à exécuter les étapes selon l'une quelconque des revendications précédentes 1 à 6, lorsqu'un tel programme est exécuté sur un ordinateur.

10. Moyen lisible par ordinateur comprenant un programme enregistré, ledit moyen lisible par ordinateur comprenant des moyens de code programme aptes à exécuter les étapes selon les revendications 1 à 6, lorsque ledit programme est exécuté sur un ordinateur.
